# EUROPÄISCHE PATENTSCHRIFT

(11) **EP 0 836 983 B1**
(45) Veröffentlichungstag und Bekanntmachung des Hinweises auf die Patenterteilung: **21.11.2001**
(21) Anmeldenummer: 97116766.3
(22) Anmeldetag: 26.09.1997
(51) Int. Cl.: B62D 29/00, B62D 25/04, B62D 33/03

(54) **Vorderwandrahmen für eine selbsttragende Karosserie eines Personenkraftwagens und Verfahren zu seiner Herstellung**
Firewall-frame for a monocoque body of a passenger car and its method of construction
Cadre de cloison pare-feu pour une carrosserie monocoque de véhicule automobile et méthode pour sa construction

(30) Priorität: 17.10.1996 DE 19642833
(43) Veröffentlichungstag der Anmeldung: 22.04.1998
(73) Patentinhaber: DaimlerChrysler AG, 70567 Stuttgart (DE)
(72) Erfinder: Guré, Dietmar, 71120 Grafenau (DE); Heiss, Werner, 71063 Sindelfingen (DE); Vollmer, Meinrad, 72108 Rottenburg (DE)

(56) Entgegenhaltungen:
- WO-A-96/39322
- GB-A- 737 655
- US-A- 5 213 391

## Beschreibung

Die Erfindung betrifft einen Vorderwandrahmen für eine selbsttragende Karosserie eines Personenkraftwagens mit zwei A-Säulen, einem unterhalb einer Windschutzscheibe angeordneten Querträger, einem oberhalb der Windschutzscheibe angeordneten Dachquerträger, sowie einem Stirnwandquerträger, und ein Verfahren zu seiner Herstellung.

Solche Vorderwandrahmen für Personenkraftwagen sind allgemein bekannt. Ein solcher Vorderwandrahmen ist als Stahlblechkonstruktion aufgebaut, wobei die A-Säulen und die Querträger aus entsprechend gestalteten Profilschalen zusammengesetzt sind. Die Stahlblechkonstruktion für den Vorderwandrahmen ist aus einer Vielzahl von Einzelteilen zusammengesetzt, die durch Schweißen miteinander verbunden werden müssen. Dies bedingt einen relativ hohen Herstellungsaufwand.

Ein vorderwandrahmen gemäß Oberbegriff des Anspruchs 1 ist aus der EP 0 146 716 bekannt.

Aufgabe der Erfindung ist es, einen Vorderwandrahmen der eingangs genannten Art zu schaffen, der eine einfachere Herstellung ermöglicht.

Diese Aufgabe wird dadurch gelöst, daß die A-Säulen als Gußteile und der Querträger, der Dachquerträger und der Stirnwandquerträger als Strangpreßprofile gestaltet sind, und daß die A-Säulen mit den Stirnenden der verschiedenen Querträger durch formschlüssiges Umgießen verbunden sind. Dadurch ist es möglich, die A-Säulen und die verschiedenen Querträger, nämlich den unterhalb der Windschutzscheibe angeordneten Querträger, den oberhalb der Windschutzscheibe angeordneten Dachquerträger sowie den Stirnwandquerträger, jeweils als einstückige Bauteile herzustellen, die durch das formschlüssige Umgießen in einfacher Weise stabil zu dem Vorderwandrahmen zusammensetzbar sind. Der Herstellungsaufwand für einen solchen erfindungsgemäßen Vorderwandrahmen ist gegenüber bekannten Vorderwandrahmen erheblich reduziert.

In Ausgestaltung der Erfindung sind die Gußteile und die Strangpreßprofile aus einem Leichtmetallwerkstoff hergestellt. Dadurch wird das Gewicht des Vorderwandrahmens gegenüber einer Stahlblechkonstruktion erheblich reduziert.

In weiterer Ausgestaltung der Erfindung ist in jeder A-Säule jeweils ein sich über die gesamte Länge der A-Säule erstreckendes Verstärkungsrohr durch Umgießen integriert. Dadurch wird mit einfachen Mitteln eine erhöhte Stabilität der A-Säulen und damit auch des gesamten Vorderwandrahmens erzielt. Die Verstärkungsrohre werden vorzugsweise nach dem Abdichten ihrer gegenüberliegenden Stirnenden in die Gießform für die A-Säule mit eingelegt und während des Gießverfahrens in einfacher Weise umgossen.

In weiterer Ausgestaltung der Erfindung sind die A-Säulen mit angeformten Aufnahmen zur Anbindung von Fahrzeugfunktionsteilen versehen. Zusätzliche Befestigungselemente für die Anbindung der Fahrzeugfunktionsteile werden dadurch vermieden. Als Fahrzeugfunktionsteile sind insbesondere Instrumententräger, Wagenheber, Türscharniere und ähnliches anzusehen.

In weiterer Ausgestaltung der Erfindung sind die A-Säulen mit angeformten Anschlußabschnitten für die Anbindung von Trägerprofilen der Karosserietragstruktur an den Vorderwandrahmen versehen. Dadurch wird eine einfache Anbindung des Vorbaubereiches der Karosserietragstruktur sowie der Bodenstruktur auf Höhe der Fahrgastzelle an den Vorderwandrahmen erreicht. Als angeformte Anschlußabschnitte können insbesondere Anschlußflansche für Vorbaulängsträger, Längsschweller sowie für seitliche Dachrahmen vorgesehen sein.

Beim erfindungsgemäßen Verfahren zur Herstellung eines erfindungsgemäßen Vorderwandrahmens werden die Strangpreßprofile für die Querträger und/oder die Verstärkungsrohre für die A-Säulen konfektioniert, anschließend in die jeweilige Gießform für die A-Säulen eingelegt und an ihren Stirnenden abgedichtet und schließlich formschlüssig umgossen. Unter der Konfektionierung der Strangpreßprofile ist das Ablängen und gegebenenfalls Biegen der Strangpreßprofile je nach den gewünschten Abmessungen der Querträger oder der Verstärkungsrohre zu verstehen.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt eine perspektivische Darstellung einer Ausführungsform eines erfindungsgemäßen Vorderwandrahmens im zusammengebauten Zustand und
- Fig. 2: eine perspektivische Explosionsdarstellung des Vorderwandrahmens nach Fig. 1.

Ein Vorderwandrahmen 1 für eine selbsttragende Karosserie eines Personenkraftwagens stellt einen vorderen Teil einer Fahrgastzelle der Karosserie dar und weist auf gegenüberliegenden Seiten zwei A-Säulen 2 auf, die jeweils als Gußteile aus einem Leichtmetallwerkstoff einstückig hergestellt sind. Die A-Säulen 2 sind durch mehrere Querträger 3, 4, 5 miteinander verbunden, von denen ein erster Querträger 3 einen oberhalb einer Windschutzscheibe angeordneten Dachquerträger 3, ein zweiter Querträger einen unterhalb der Windschutzscheibe angeordneten Querträger 4 und ein dritter Querträger einen im Bereich einer nicht dargestellten Stirnwand verlaufenden Stirnwandquerträger 5 darstellen. Die Querträger 3, 4, 5 sind als Strangpreßprofile ebenfalls aus einem Leichtmetallwerkstoff hergestellt und entsprechend den vorgegebenen Abmessungen und Funktionsanforderungen konfektioniert. Zur Konfektionierung der Querträger 3, 4, 5 zählt die entsprechende Ablängung der Strangpreßprofile, eine Biegung der Strangpreßprofile entsprechend der geforderten Krümmung für die Querträger 3, 4, 5 sowie gegebenenfalls eine spanende Bearbeitung der Strangpreßprofile zur Bildung entsprechender Aufnahmen für Funktionsteile des Personenkraftwagens.

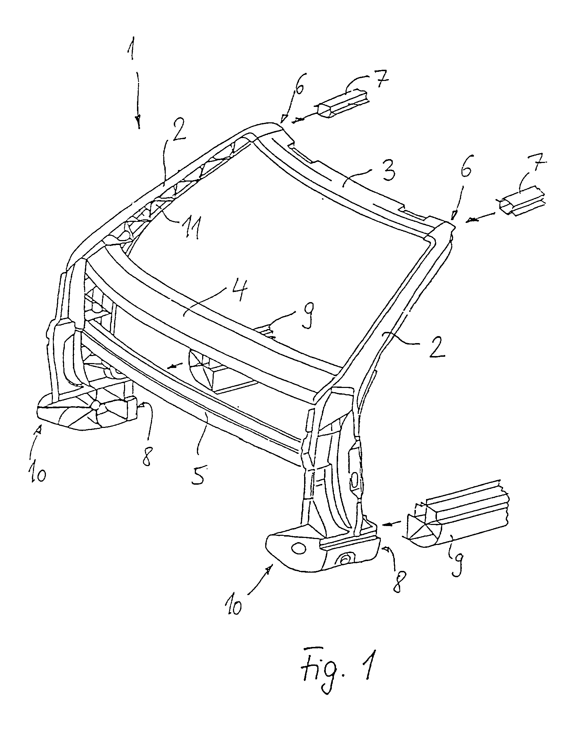

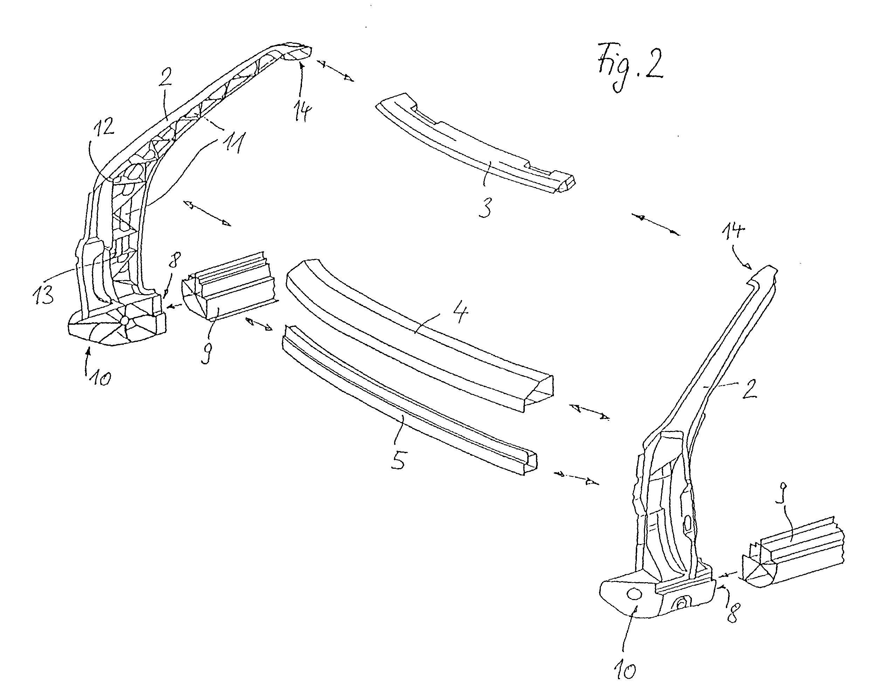

In die A-Säulen 2 ist jeweils ein Verstärkungsrohr 11 integriert, das aus Stahl hergestellt ist und sich über nahezu die gesamte Länge der A-Säule 2 erstreckt. Das Verstärkungsrohr 11 versteift die A-Säule 2 unter vorteilhafter Einbindung der positiven Eigenschaften des Stahles. Die Verstärkungsrohre 11 sind formschlüssig von den A-Säulen 2 umgossen. Dazu werden die Verstärkungsrohre 11 vor der Herstellung der A-Säulen 2 in die entsprechenden Gießformen der A-Säulen 2 eingelegt, an ihren gegenüberliegenden Stirnenden verschlossen und somit abgedichtet und anschließend in einfacher Weise durch den Leichtmetallwerkstoff für die A-Säulen 2 umgossen, so daß sich die in den Fig. 1 und 2 dargestellte Integration der Verstärkungsrohre 11 ergibt.

Auch die Verbindung der Querträger 3, 4, 5 mit den A-Säulen 2 erfolgt durch formschlüssiges Umgießen der jeweiligen Stirnenden der Querträger 3, 4, 5 in den Gießformen für die A-Säulen 2. Auch bei diesem formschlüssigen Umgießen sind die Hohlräume der Querträger 3, 4, 5 derart abgedichtet, daß keine Gußmasse in unerwünschter Weise in die Hohlprofile eindringen kann. Die Anschlußbereiche, an denen die Querträger 3, 4, 5 mit ihren Stirnenden in die A-Säulen 2 eingebunden werden, sind in Fig. 2 mit den Bezugszeichen 12, 13, 14 versehen, wobei der Anbindungsbereich 12 für den Querträger 4, der Anbindungsbereich 13 für den Stirnwandquerträger 5 und der Anbindungsbereich 14 für den Dachquerträger 3 vorgesehen sind.

An den A-Säulen 2 sind bei der Herstellung in der Gießform bereits mehrere Aufnahmen für die Anbindung weiterer Fahrzeugfunktionsteile, wie eines Instrumententrägers, einer Wagenheberaufnahme, für Türscharniere und ähnliches angeformt. Außerdem weist jede A-Säule 2 Anschlußabschnitte 6, 8, 10 für die Anbindung von Trägerprofilen der Karosserietragstruktur auf. Der Anschlußabschnitt 8 ist im Bereich der Bodenstruktur der Karosserie an der A-Säule 2 vorgesehen und dient zur Anbindung jeweils eines Längsschwellers 9 der Bodenstruktur. Auf gleicher Höhe nach vorne ragt an jeder A-Säule 2 ein Anschlußabschnitt 10 auf, der für die Anbindung eines Vorbaulängsträgers 10 dient. Im Bereich der oberen Stirnenden der A-Säulen 2 sind Anschlußabschnitte 6 für die Anbindung seitlicher Dachrahmenträger 7 vorgesehen.

Um nun den beschriebenen Vorderwandrahmen 1 mit dem Vorbaubereich, der Bodenstruktur sowie dem übrigen Bereich der Fahrgastzelle zu verbinden, werden zum einen die Vorbaulängsträger an den Anschlußabschnitten 10 mit den A-Säulen 2 sowie mit einem mittleren Bereich des Stirnwandquerträgers 5 verbunden. Die Festlegung der zweiten Längsträgerebene des Vorbaubereiches erfolgt zum einen ebenfalls an der A-Säule 2 im Bereich von nicht näher bezeichneten Anschlußabschnitten und zum anderen in den äußeren Bereichen des Querträgers 4. Ein Mitteltunnel der Bodenstruktur wird mittig an den Stirnwandquerträger 5 angebunden, wodurch gleichzeitig auch eine Verbindung zu den Vorbaulängsträgern geschaffen wird.

## Patentansprüche

1. Vorderwandrahmen für eine selbsttragende Karosserie eines Personenkraftwagens mit zwei A-Säulen (2), einem unterhalb einer Windschutzscheibe angeordneten Querträger (4), einem oberhalb der Windschutzscheibe angeordneten Dachquerträger (3), sowie einem Stirnwandquerträger (5), wobei die Querträger (3,4,5) als Strangpreßprofile ausgebildet sind,
**dadurch gekennzeichnet,**
**daß** die A-Säulen (2) als Gußteile gestaltet sind, und daß die A-Säulen (2) mit den Stirnenden der verschiedenen Querträger (3, 4, 5) durch formschlüssiges Umgießen verbunden sind, wobei in jeder A-Säule (2) jeweils ein sich über nahezu die gesamte Länge der A-Säule (2) erstreckendes Verstärkungsrohr (11) durch Umgießen integriert ist.

2. Vorderwandrahmen nach Anspruch 1,
**dadurch gekennzeichnet,**
**daß** die A-Säulen (2) mit angeformten Aufnahmen zur Anbindung von Fahrzeugfunktionsteilen versehen sind.

3. Vorderwandrahmen nach wenigstens einem der vorhergehenden Ansprüche
**dadurch gekennzeichnet, daß**
die A-Säulen (2) mit angeformten Anschlußabschnitten (6, 7, 10) für die Anbindung von Trägerprofilen (7, 9) der Karosserietragstruktur an den Vorderwandrahmen (1) versehen sind.

4. Vorderwandrahmen nach einem der vorhergehenden Ansprüche,
**dadurch gekennzeichnet, daß**
die Gußteile und die Strangpreßprofile aus einem Leichtmetallwerkstoff hergestellt sind.

5. Verfahren zur Herstellung eines Vorderwandrahmens nach einem der Ansprüche 1 bis 4,
**dadurch gekennzeichnet, daß**
die Strangpreßprofile für die Querträger (3, 4, 5) und/oder die Verstärkungsrohre (11) für die A-Säulen (2) konfektioniert werden, anschließend in die jeweilige Gießform für die A-Säulen (2) eingelegt und an ihren Stirnenden abgedichtet werden und schließlich formschlüssig umgossen werden.

## Claims

1. Front face frame for a self-supporting bodywork of a passenger vehicle with two A-columns (2), a transverse support (4) beneath a windscreen, a roof transverse support (3) above a windscreen, and an end face transverse support (5), whereby the transverse supports (3, 4, 5) are developed as extruded forms,
**characterized in that**
the A-columns (2) are formed as castings and are connected to the ends of the different transverse supports (3, 4, 5) by casting around them, whereby a reinforcement pipe (11) is, through recasting, integrated into each A-column (2), in each case over nearly the full length of the A-column (2).

2. Front face frame in accordance with claim 1,
**characterized in that**
the A-columns (2) have uptake elements formed on them, for the attachment of functional parts of the vehicle.

3. Front face frame in accordance with at least one of the preceding claims
**characterized in that**
the A-columns (2) are provided with connection parts (6, 7, 10) for the attachment of support sections (7, 9) of the bodywork support-structure to the front face frame (1).

4. Front face frame in accordance with any one of the preceding claims,
**characterized in that**
the castings and the extruded parts are produced from a light, metal material.

5. Process for producing a front face frame in accordance with any one of claims 1 to 4,
**characterized in that**
the extruded parts for the transverse supports (3, 4, 5) and/or for the reinforcement pipes (11) for the A-columns (2) are manufactured, are then inserted into the given mould for the A-columns (2), are sealed at their ends, and are finally, form-locking, recast.

## Revendications

1. Cadre de paroi avant pour une carrosserie autoporteuse d'une voiture de tourisme, comportant deux montants de pare-brise (2), une poutre transversale (4) disposée en dessous d'un pare-brise, une poutre transversale de toit (3) disposée au-dessus du pare-brise, ainsi qu'une poutre transversale de paroi frontale (5), dans lequel les poutres transversales (3, 4, 5) sont conçues sous forme de profilés continus extrudés,
**caractérisé par le fait**
**que** les montants de pare-brise (2) sont fabriqués sous forme de pièces moulées et que les montants de pare-brise (2) sont reliés aux extrémités frontales des différentes poutres transversales (3, 4, 5) par le fait qu'à la coulée. des montants les poutres sont entourées par les montants, avec complémentarité de forme, étant précisé qu'un tube de renfort (11), s'étendant sur presque toute la longueur du montant de pare-brise (2), est intégré dans chaque montant de pare-brise (2) par le fait qu'à la coulée du montant le tube est entouré par le montant.

2. Cadre de paroi avant selon la revendication 1,
**caractérisé par le fait**
**que** les montants de pare-brise (2) comportent des réceptacles venus de moulage pour la fixation de pièces fonctionnelles du véhicule.

3. Cadre de paroi avant selon au moins l'une des revendications précédentes,
**caractérisé par le fait**
**que** les montants de pare-brise (2) comportent des tronçons de raccordement (6, 7, 10), venus de moulage, pour la fixation de profilés (7, 9) supports de la structure porteuse de la carrosserie sur la cadre de paroi avant (1).

4. Cadre de paroi avant selon au moins l'une des revendications précédentes,
**caractérisé par le fait**
**que** les pièces moulées et les profilés continus extrudés sont fabriqués en un matériau à base d'un métal léger.

5. Procédé de fabrication d'un cadre de paroi avant selon l'une des revendications 1 à 4,
**caractérisé par le fait que** l'on confectionne les profilés continus extrudés pour les poutres transversales (3, 4, 5) et/ou les tubes de renfort (11) pour les montants de pare-brise (2), puis qu'on les place dans le moule respectif pour les montants de pare-brise (2) et qu'on les rend étanches à leurs extrémités frontales et qu'enfin la coulée les entoure par complémentarité de forme.
